# EUROPEAN PATENT APPLICATION

(11) **EP 2 980 317 A1**
(43) Date of publication of application: **03.02.2016**
(21) Application number: 15002147.5
(22) Date of filing: 20.07.2015
(51) Int. Cl.: E02F 3/34, E02F 9/20, G05B 13/02, G05G 1/00, B66C 13/56, B66F 9/20

(54) **MULTIPLE CONTROL PATTERNS FOR HYDRAULICALLY OPERATED MACHINES WITH HAND AND FOOT CONTROLS**

(30) Priority: 30.07.2014 US 201414446631
(71) Applicant: Caterpillar Inc., Peoria, IL 61629 (US)
(72) Inventor: Pinther II, George Carl, Peoria, Illinois 61629-9510 (US); Parker, Jeffrey M., Peoria, Illinois 61629-9510 (US); Bright, Christopher E., Peoria, Illinois 61629-9510 (US); Fredrickson, Andrew A., Peoria, Illinois 61629-9510 (US); Myslik, John E., Peoria, Illinois 61629-9510 (US)
(74) Representative: Modiano, Micaela Nadia

(57) **Abstract**

A control system (40) for a machine (20) having traction devices (24), an implement (32), and a hydraulic system (44) configured to drive the traction devices (24) and the implement (32) is disclosed. The control system (40) may include a controller (42) in communication with an operator interface (46) and the hydraulic system (44). The controller (42) may be configured to receive a signal from the operator interface (46) to operate the machine (20) according to a first predetermined control pattern, send signals to the to the hydraulic system (44) to control the machine (20) according to the first predetermined control pattern, receive a signal from the operator interface (46) to operate the machine (20) according to a second predetermined control pattern, and send signals to the hydraulic system (44) to control the machine (20) according to the second predetermined control pattern.

## Description

### Field of the Disclosure

The present disclosure relates generally to machines and, more particularly, to control systems and methods with multiple control patterns in a machine.

### Background of the Disclosure

Work machines, such as skid-steer loaders, are typically used for loading and moving materials, such as, dirt, asphalt, gravel, rocks, sand, snow, debris, etc. In addition, skid-steer loaders may also be used for digging, grading, and other operations. Although skid-steer loaders typically include lift arms attached to a bucket, one or more implements may be supported by a skid-steer loader. For example, other implements may include a backhoe, hydraulic breaker, pallet fork, sweeper, auger, stump grinder, tree spade, trencher, ripper, tiller, and the like.

Generally, skid-steer loaders have four wheels (or other traction devices, e.g., tracks) that are mechanically locked in synchronization on each side with the left-side wheels capable of being driven independently of the right-side wheels. Turning the left-side wheels and the right-side wheels at different speeds turns the machine by skidding. Operators manipulate controls, such as, joysticks and foot pedals, in order to control a direction of movement of the machine, a machine speed, the implement's lift mechanism, tilt mechanism, and other auxiliary mechanisms.

Different makes of skid-steer loaders may have different control patterns to perform a particular function of the machine and/or implement. For example, with different control patterns, different movements and different combinations of operator controls may perform the same function on two different makes of skid-steer loaders. After becoming familiar with one control pattern on one machine, an operator may have difficulty using a new control pattern on a different machine. As a result, there is a need for the ability to change control patterns on the same machine.

For example, U.S. Patent Application Publication No. 2006/0064221 A1, entitled, "Operator Selectable Control Pattern," describes a work machine equipped with a plurality of control patterns stored in a controller. With the system of the 2006/0064221 A1 patent application publication, an operator can select one control pattern from the plurality of control patterns to change the control pattern of the work machine. The 2006/0064221 A1 patent application publication also discloses an interlock control system, wherein to change the control pattern of the control members, an operator actuates a first input device and a second input device substantially simultaneously.

It should be appreciated that the solution of any particular problem is not a limitation on the scope of this disclosure or of the attached claims except to the extent expressly noted. Additionally, this background section discusses observations made by the inventors; the inclusion of any observation in this section is not an indication that the observation represents known prior art except that the contents of the indicated patent represent a publication. With respect to the identified patent, the foregoing summary thereof is not intended to alter or supplement the prior art document itself; any discrepancy or difference should be resolved by reference to the document itself.

### Summary of the Disclosure

In accordance with one embodiment, a control system for a machine having traction devices, an implement, and a hydraulic system configured to drive the traction devices and the implement is disclosed. The control system may include an operator interface configured to receive input from and output data to an operator of the machine. The control system may further include a controller in communication with the operator interface and the hydraulic system. The controller may be configured to receive a signal from the operator interface to operate the machine according to a first predetermined control pattern, send signals to the to the hydraulic system to control the machine according to the first predetermined control pattern, receive a signal from the operator interface to operate the machine according to a second predetermined control pattern, and send signals to the hydraulic system to control the machine according to the second predetermined control pattern.

In accordance with another embodiment, a machine is disclosed. The machine may include a traction device, an implement, a hydraulic system configured to drive the traction device and the implement, and an operator interface configured to receive input from and output data to an operator of the machine. The operator interface may include hand operator controls and foot operator controls. The machine may further include a controller in communication with the operator interface and the hydraulic system. The controller may be configured to: receive a signal from the operator interface to operate the machine according to a first predetermined control pattern including hand operator controls, send signals to the hydraulic system in accordance with the first predetermined control pattern selection, receive a signal from the operator interface to operate the machine according to a second predetermined control pattern including hand operator controls and foot operator controls, and send signals to the hydraulic system in accordance with the second predetermined control pattern.

In accordance with yet another embodiment, a method for controlling a machine is disclosed. The machine may have a controller in communication with an operator interface and a hydraulic system. The operator interface may be configured to receive input from and output data to an operator of the machine, and may include a switch configured to receive input from the operator for a control pattern selection. The hydraulic system may be configured to control traction devices and an implement of the machine. The method may comprise storing a first predetermined control pattern and a second predetermined control pattern in a memory associated with the controller. The first predetermined control pattern may include hand operator controls, and the second predetermined control pattern may include hand operator controls and foot operator controls. The method may further comprise the controller receiving a signal from the switch indicative of a control pattern selection of the operator, the control pattern selection being one of the first predetermined control pattern and the second predetermined control pattern. The method may further comprise the controller sending signals to the hydraulic system to control the traction devices and the implement according to the control pattern selection.

These and other aspects and features will become more readily apparent upon reading the following detailed description when taken in conjunction with the accompanying drawings. In addition, although various features are disclosed in relation to specific exemplary embodiments, it is understood that the various features may be combined with each other, or used alone, with any of the various exemplary embodiments without departing from the scope of the disclosure.

### Brief Description of the Drawings

FIG. 1 is a side view of a machine constructed in accordance with one embodiment of the present disclosure;
FIG. 2 is a block diagram of a control system for the machine of FIG. 1;
FIG. 3 is a diagrammatic view of a first predetermined control pattern included in the control system of FIG. 2;
FIG. 4 is a diagrammatic view of a second predetermined control pattern included in the control system of FIG. 2;
Fig. 5 is a diagrammatic view of a third predetermined control pattern included in the control system of FIG. 2;
FIG. 6, is a diagrammatic view of a fourth predetermined control pattern included in the control system of FIG. 2;
FIG. 7 is a perspective view of a switch for the control system of FIG. 2;
FIG. 8 is a top view of a floor of an operator cab for the machine of FIG. 1;
FIG. 9 is a perspective view of a pedal on the floor of FIG. 8;
FIG. 10 is a side view of the pedal of FIG. 9;
FIG. 11 is a perspective view of a control for the control system of FIG. 2; and
FIG. 12 is a flowchart illustrating a process for controlling a machine according to another embodiment.

While the present disclosure is susceptible to various modifications and alternative constructions, certain illustrative embodiments thereof will be shown and described below in detail. The disclosure is not limited to the specific embodiments disclosed, but instead includes all modifications, alternative constructions, and equivalents thereof.

### Detailed Description

The present disclosure provides a system and method for controlling a machine. The system and method provide multiple control patterns on a single machine. An operator of the machine can switch from one control pattern to another in order to easily adapt to the machine. Furthermore, the operator can select a control pattern that includes hand controls and foot controls, and then switch to a control pattern that includes hand controls only.

In order to implement control pattern switching on the machine, electronic joysticks and pedals may be used. Due to the pedals being electronically connected to a controller (e.g., instead of mechanically hard-linked to the traction devices or implements), mounting positions of the pedals may be adjustable to accommodate for the varying physical heights of different operators, thereby allowing enhanced ergonomics in the operator cab. In another example, a throttle pedal functionality may be maintained in one of the pedals when operating in the control pattern that includes hand controls only.

Reference will now be made in detail to specific embodiments or features, examples of which are illustrated in the accompanying drawings. Generally, corresponding reference numbers will be used throughout the drawings to refer to the same or corresponding parts.

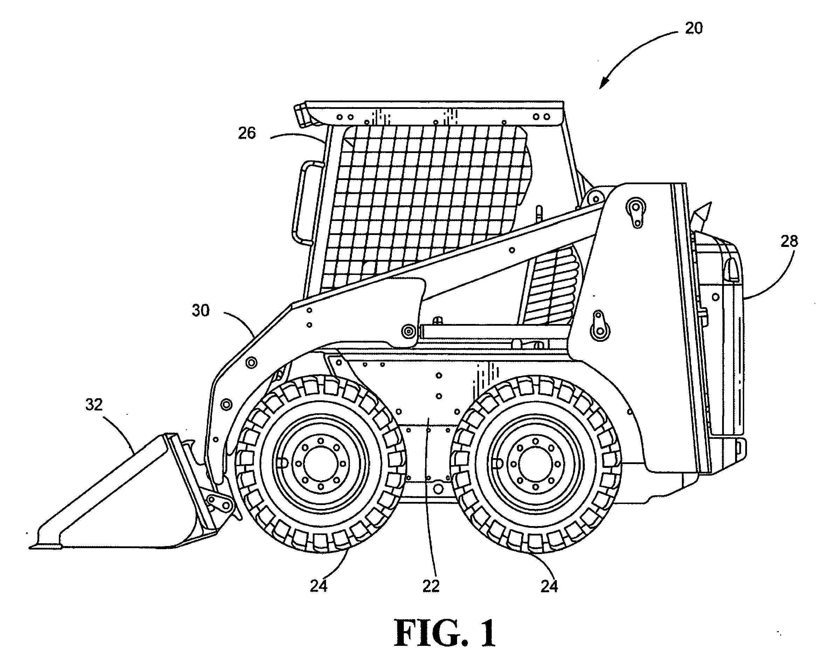

FIG. 1 illustrates a machine 20 consistent with certain embodiments of the present disclosure. It is to be understood that although the machine 20 is illustrated as a skid-steer loader, the machine may be of any other type. As used herein, the term "machine" refers to a mobile machine that performs a driven operation involving physical movement associated with a particular industry, such as, without limitation, construction, landscaping, forestry, transportation, mining, agriculture, etc.

Non-limiting examples of machines include commercial and industrial machines, such as, skid-steer loaders, multi-terrain loaders, compact track loaders, backhoe loaders, wheel loaders, tractors, or other types of machines that operate in a work environment. It is also to be understood that the machine 20 is shown primarily for illustrative purposes to assist in disclosing features of various embodiments, and that FIG. 1 does not depict all of the components of a machine.

As shown in FIG. 1, machine 20 may include a frame 22 to which traction devices 24 are connected, two on each side. Although only two traction devices 24 are shown in FIG. 1, there are two traction devices on the other side of the machine 20. Furthermore, the traction devices 24 in FIG. 1 are shown as wheels. However, it is to be understood that the traction devices 24 may be tracks or other types of traction devices. The frame 22 of the machine 20 may support an operator cab 26, an engine 28 or other power source, and lift arms 30 (one lift arm on each side of the frame 22). An implement 32, such as, a bucket or other implement, may be pivotally mounted to the lift arms 30.

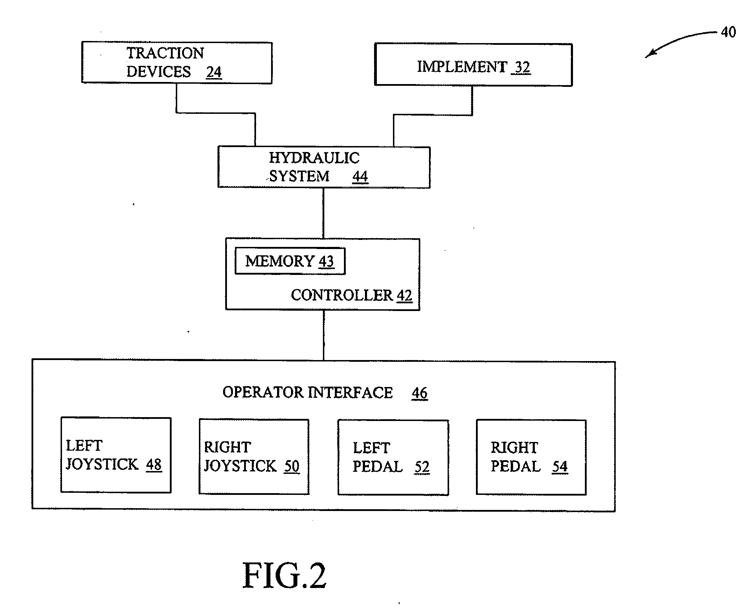

Referring now to FIG. 2, with continued reference to FIG. 1, the machine 20 may further include a control system 40. The control system 40 may comprise a controller 42 in communication with a hydraulic system 44 and an operator interface 46. The controller 42 may comprise a processor (e.g., "computer processor") or processor-based device that may include or be associated with a non-transitory computer readable storage medium having stored thereon computer-executable instructions. One or more algorithms may be programmed into a memory 43 associated with the controller 42 in order to control the machine 20 and operate the implement 32. It is understood that the control system 40 and controller 42 may include other hardware, software, firmware, or combinations thereof.

Based on signals received from the controller 42, the hydraulic system 44 may be configured to drive and control the traction devices 24, lift arms 30, and implement 32. For example, the hydraulic system 44 may include one or more pumps, motors, valves, cylinders, and the like. Furthermore, the signals from the controller 42 may be, for example, electro-hydraulic signals that control operation of the hydraulic system 44.

The operator interface 46 may be configured to receive input from and output data to an operator of the machine 20. For example, the operator interface 46 may include a plurality of operator controls for controlling operation of the machine 20 and implements connected thereto. Examples of operator controls may include, but not be limited to, one or more joysticks (e.g., left joystick 48 and right joystick 50), pedals (e.g., left pedal 52 and right pedal 54), buttons, switches, dials, levers, steering wheels, keyboards, touchscreens, displays, monitors, screens, control panels, instrument panels, gauges, speakers, voice recognition software, microphones, etc.

Each of the operator controls in the operator interface 46, e.g., left joystick 48, right joystick 50, left pedal 52, and right pedal 54, may be operably connected to the controller 42, and may be configured to provide a signal indicative of a position of the operator control to the controller 42. Based on signals received from the operator interface 46, the controller 42 sends signals to the hydraulic system 44 in order to control operation of the machine 20 and implement 32. For example, the controller 42 may include a plurality of predetermined control patterns stored in the memory 43 associated with the controller 42. A predetermined control pattern may be a map that coordinates the position of the operator control with the signal being sent to the hydraulic system 44.

In one example, a first predetermined control pattern may include hand operator controls only. Hand operator controls may be operator controls in the operator interface 46 that are controlled by the operator's hands. For example, hand operator controls may include the left joystick 48, which may be manipulated by a left hand of the operator, and the right joystick 50, which may be manipulated by a right hand of the operator. However, other types of hand operator controls are certainly possible.

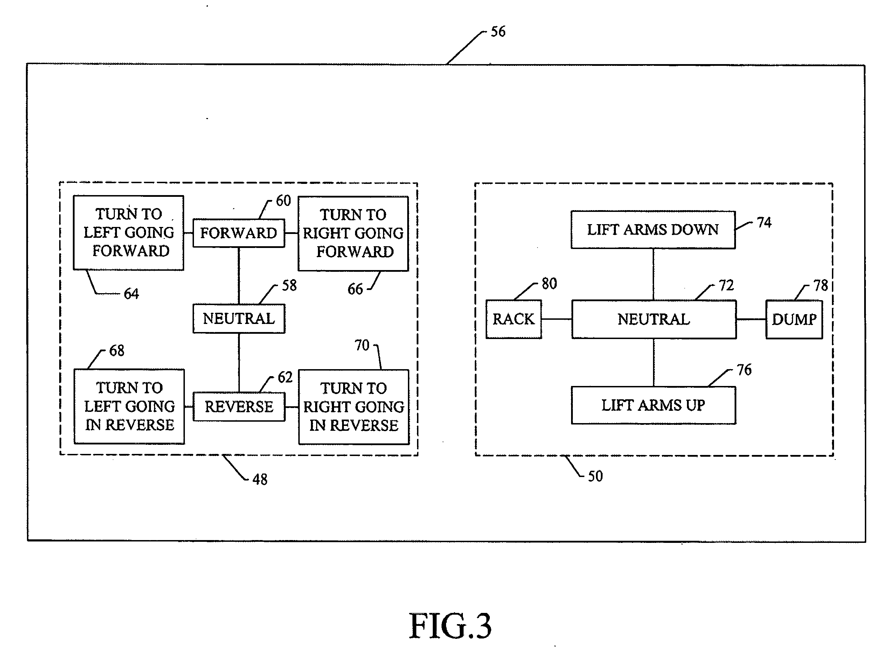

For instance, the first predetermined control pattern may be an international organization for standardization (ISO) control pattern 56, as shown best in FIG. 3. In the ISO control pattern 56, the left joystick 48 controls a drive function of the machine 20, while the right joystick 50 controls a loader function of the implement 32. More specifically, pushing the left joystick 48 away from the operator past a neutral position 58 to a forward position 60 drives the machine 20 in a forward direction straight ahead. Pulling the left joystick 48 back toward the operator past the neutral position 58 to a backward position 62 drives the machine 20 in a backward or reverse direction.

In the ISO control pattern 56, pushing the left joystick 48 to a forward left corner position 64 steers the machine 20 left travelling forward, and pushing the left joystick 48 to a forward right corner position 66 steers the machine 20 right travelling forward. Similarly, pulling the left joystick 48 to a backward left corner position 68 steers the machine 20 left travelling backwards or in reverse, and pulling the left joystick 48 to a backward right corner position 70 steers the machine 20 right travelling backwards or in reverse.

Furthermore, in the ISO control pattern 56, pushing the right joystick 50 away from the operator past a neutral position 72 to a forward position 74 lowers the lift arms 30, thereby lowering the implement 32. Pulling the right joystick 50 back toward the operator past the neutral position 72 to a backward position 76 raises the lift arms 30, thereby raising the implement 32. Pushing the right joystick 50 away from the operator past the neutral position 72 to a right position 78 pushes the implement 32, e.g., bucket, away from the operator into a dump position. Pulling the right joystick 50 to a left position 80 brings the implement 32, e.g., bucket, toward the operator into a rack position.

In another example, a second predetermined control pattern may include both hand operator controls and foot operator controls. Hand operator controls may include the left joystick 48 and the right joystick 50. Foot operator controls may be operator controls in the operator interface 46 that are controlled by the operator's feet. For example, foot operator controls may include the left pedal 52, which may be manipulated by a left foot of the operator, and the right pedal 54, which may be manipulated by a right foot of the operator. However, other types of foot operator controls are certainly possible.

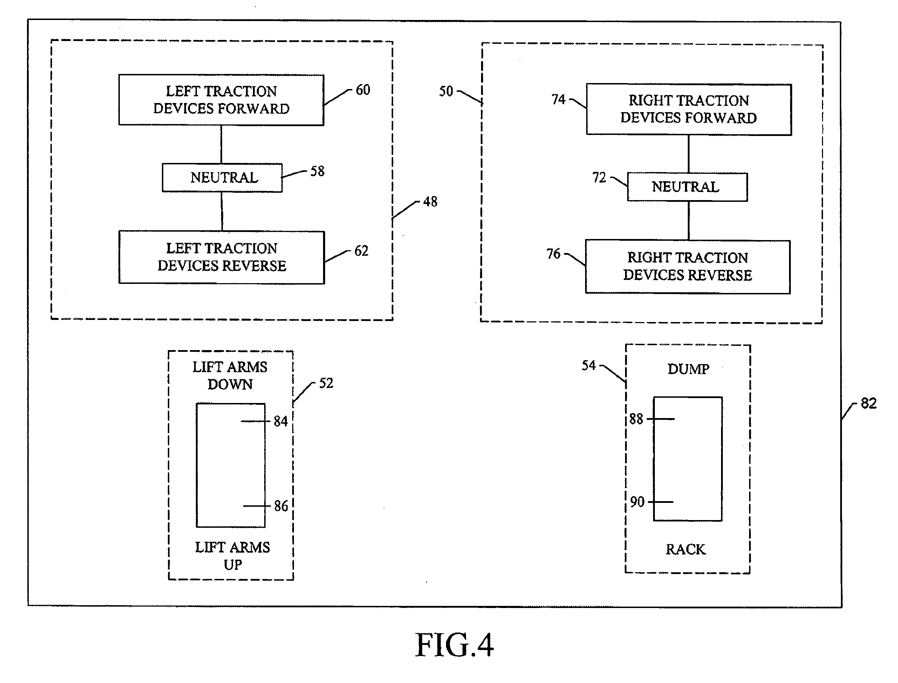

For instance, the second predetermined control pattern may be a hand and foot control pattern 82, as shown best in FIG. 4. In the hand and foot control pattern 82, the left and right joysticks 48, 50 control the drive function of the machine 20, while the left and right pedals 52, 54 control the loader function of the implement 32. More specifically, the left joystick 48 controls the traction devices 24 on a left side of the machine 20, and the right joystick 50 controls the traction devices 24 on a right side of the machine 20.

In the hand and foot control pattern 82, pushing the left joystick 48 away from the operator past the neutral position 58 to the forward position 60 moves the traction devices 24 on the left side of the machine 20 forward, and pulling the left joystick 48 back toward the operator past the neutral position 58 to the backward position 62 moves the traction devices 24 on the left side of the machine 20 backwards or in reverse. Similarly, pushing the right joystick 50 away from the operator past the neutral position 72 to the forward position 74 moves the traction devices 24 on the right side of the machine 20 forward, and pulling the right joystick 50 back toward the operator past the neutral position 72 to the backward position 76 moves the traction devices 24 on the right side of the machine 20 backwards or in reverse.

Furthermore, in the hand and foot control pattern 82, pushing an upper portion 84 of the left pedal 52 lowers the lift arms 30, thereby lowering the implement 32. Pushing a lower portion 86 of the left pedal 52 raises the lift arms 30, thereby raising the implement 32. For the right pedal 54, pushing an upper portion 88 of the right pedal 54 pushes the implement 32, e.g., bucket, away from the operator into the dump position. Pushing a lower portion 90 of the right pedal 54 brings the implement 32, e.g., bucket, toward the operator into the rack position.

It is to be understood that the implement functions (e.g., lift and tilt) may be switched between the two pedals 52, 54. For example, pushing the upper and lower portions 84, 86 of the left pedal 52 may tilt the implement 32, e.g., maneuver the bucket into the dump and rack positions, and pushing the upper and lower portions 88, 90 of the right pedal 54 may lower and raise the implement 32. However, other configurations are certainly possible.

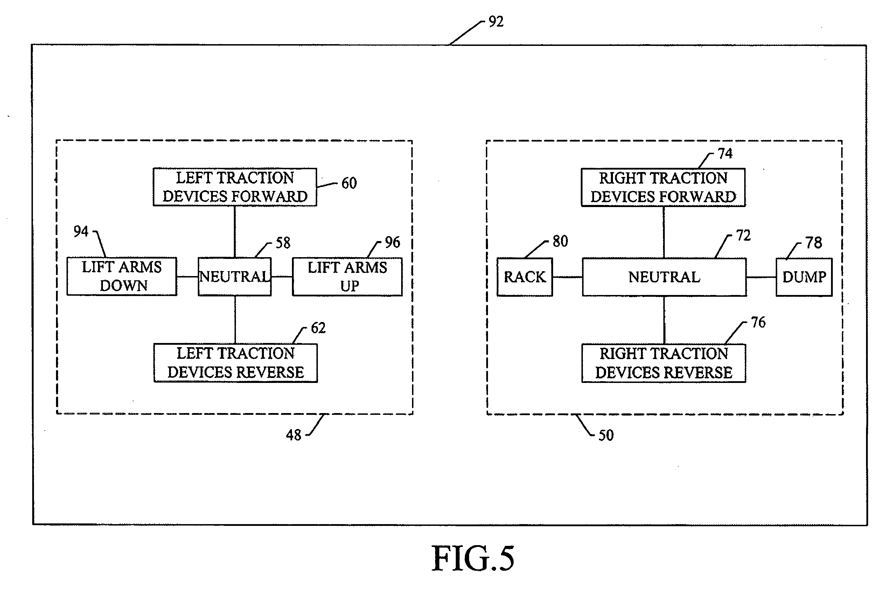

In yet another example, the controller 42 may include a third predetermined control pattern that includes only hand operator controls. For instance, the third predetermined control pattern may be an H control pattern 92, shown best in FIG. 5. In the H control pattern 92, the left and right joysticks 48, 50 may jointly control the drive function of the machine 20 and the loader function of the implement 32.

For example, in the H control pattern 92, pushing the left joystick 48 to the forward position 60 moves the traction devices 24 on the left side of the machine 20 in a forward direction. Pulling back the left joystick 48 to the backward position 62 moves the traction devices 24 on the left side of the machine 20 in a backward or reverse direction. Similarly, manipulating the right joystick 50 to the forward position 74 or the backward position 76 moves the traction devices 24 on the right side of the machine 20 in a forward direction or a backward/reverse direction, respectively.

In the H control pattern 92, pushing the left joystick 48 away from the operator past the neutral position 58 to a left position 94 lowers the lift arms 30, thereby lowering the implement 32. Pulling the left joystick 48 toward the operator past the neutral position 58 to a right position 96 raises the lift arms 30, thereby raising the implement 32. Pushing the right joystick 50 to the right position 78 pushes the implement 32, e.g., bucket, away from the operator into the dump position. Pulling the right joystick 50 to the left position 80 brings the implement 32, e.g., bucket, toward the operator into the rack position.

It is to be understood that more than three control patterns may be included in the control system 40. However, the control system 40 may include less than three control patterns as well. Furthermore, control patterns other than the ISO, hand and foot, and H control patterns may be programmed into the memory 43 associated with the controller 42.

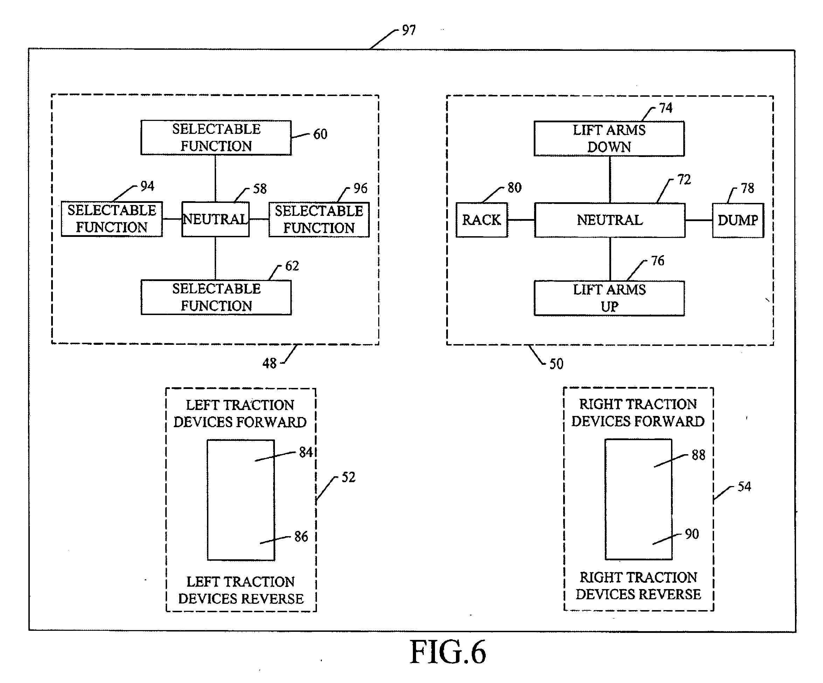

For example, in a fourth predetermined control pattern 97 shown best in FIG. 6, foot controls, e.g., the left and right pedals 52, 54, may control the drive function of the machine 20. This may be similar to drive function control in excavators, among other types of machines. For instance, pushing the upper portion 84 of the left pedal 52 may move the traction devices 24 on the left side of the machine 20 forward. Pushing the lower portion 86 of the left pedal 52 may move the traction devices 24 on the left side of the machine 20 in reverse. Similarly, pushing the upper portion 88 of the right pedal 54 may move the traction devices 24 on the right side of the machine 20 forward, and pushing the lower portion 90 of the right pedal 54 may move the traction devices 24 on the right side of the machine 20 in reverse.

In the fourth predetermined control pattern 97, the right joystick 50 (and/or left joystick 48) may control the loader function of the implement 32. For example, similar to the ISO control pattern 56, manipulating the right joystick 50 to the forward position 74 may lower the lift arms 30, manipulating the right joystick 50 to the backward position 76 may raise the lift arms, manipulating the right joystick 50 to the right position 78 may push the implement 32 (e.g., bucket) into the dump position, and manipulating the right joystick 50 to the left position 80 may bring the implement 32 (e.g., bucket) into the rack position.

Furthermore, the left joystick 48 may control an additional function of the machine 20 and/or implement 32. Manipulation of the left joystick 48 into the forward, backward, left and right positions 60, 62, 94, 96 (or other positions) may translate into operator selectable functions of the machine 20 and/or implement 32. Other configurations for the fourth predetermined control pattern 97 are certainly possible.

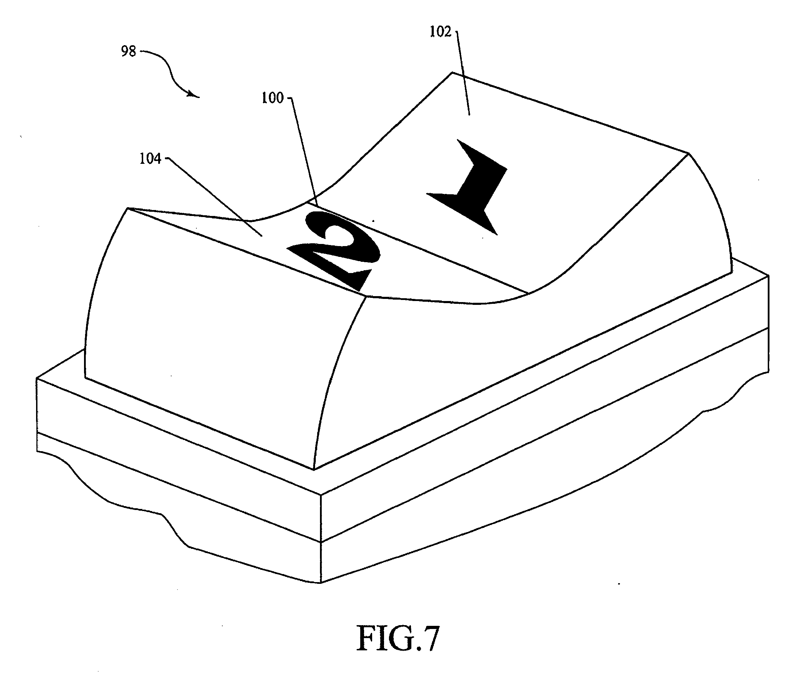

Moreover, the controller 42 may be configured to switch between each of the plurality of predetermined control patterns. The operator interface 46 may further include an operator control configured to receive input from the operator for selection of a control pattern and to provide a signal indicative of a control pattern selection of the operator. For example, the operator control may comprise a switch 98, shown best in FIG. 7. The switch 98 may be a momentary switch, a toggle switch, a rocker switch, a rotary switch, or other type of switch. However, other types of operator controls other than the switch 98 may certainly be used, such as, but not limited to, a push button, a lever, etc.

In the example of FIG. 7, the switch 98 may be biased in a neutral position 100 such that the operator has to push and hold either a first side 102 or a second side 104 of the switch 98 in order to activate one of the predetermined control patterns. After the operator has entered the control pattern selection, the switch 98 is released back into the neutral position 100. For example, a number "1" on the first side 102 of the switch 98 may represent the first predetermined control pattern, e.g., the ISO control pattern 56, and a number "2" on the second side 104 of the switch 98 may represent the second predetermined control pattern, e.g., the hand and foot control pattern 82. Other indicia and configurations for the switch 98 are certainly possible. Furthermore, more than two predetermined control patterns (e.g., the H control pattern 92, the fourth predetermined control pattern 97, etc.) may be included within a configuration for selection of a control pattern.

The operator may have to select a control pattern upon starting the machine 20, although it is certainly possible to include a pre-set control pattern as well. Moreover, at any time during operation of the machine 20, the operator may change the control pattern selection. For example, the machine 20 may be in a stopped position or brakes of the machine 20 may be activated, and the operator may input a different control pattern selection into the switch 98. However, other configurations may be used as well.

In order to allow control pattern switching, each of the left joystick 48, the right joystick 50, the left pedal 52, and the right pedal 54 may be electronic or electro-hydraulic. For example, instead of the left joystick 48, the right joystick 50, the left pedal 52, and the right pedal 54 being mechanically linked to the hydraulic system 44 directly, they may be electrically connected to the controller 42. The controller 42 then sends signals to the hydraulic system 44 based on signals received from the electronic joysticks and/or pedals.

Therefore, based on the signals received from the operator interface 46 (e.g., switch 98) indicative of the control pattern selection by the operator, as well as subsequent signals from the operator interface 46 (e.g., left joystick 48, right joystick 50, left pedal 52, and right pedal 54) indicative of operator commands, the controller 42 may send signals to the hydraulic system 44 to operate the machine 20 and implement 32 according to which predetermined control pattern the operator selected. It is to be understood that other means than electronic joysticks and pedals may be used to implement control pattern switching as well.

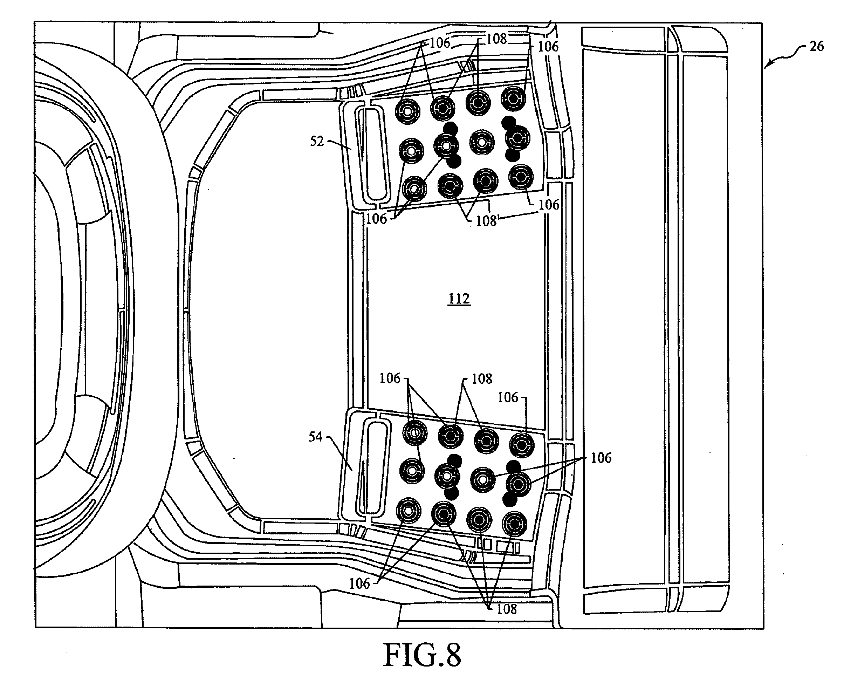

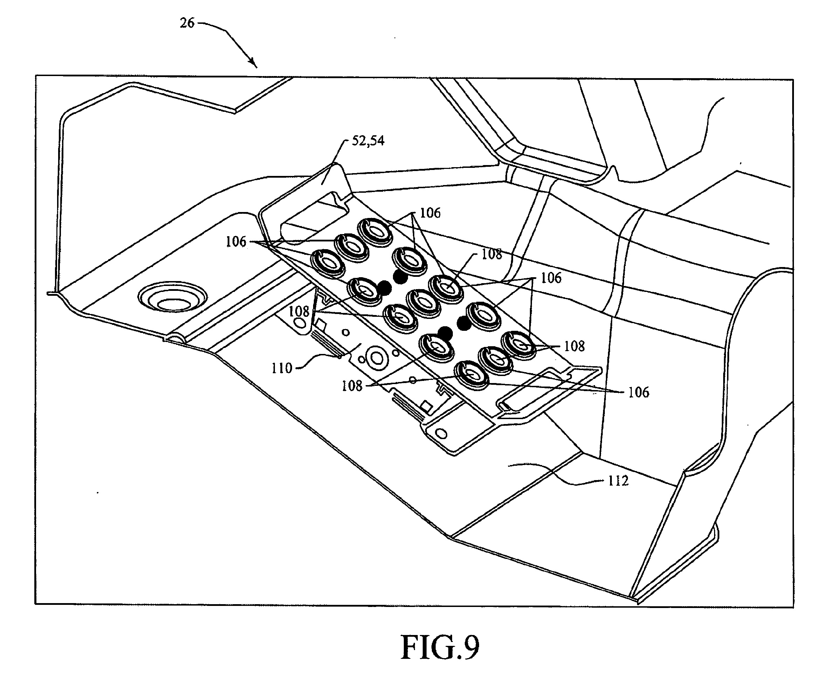

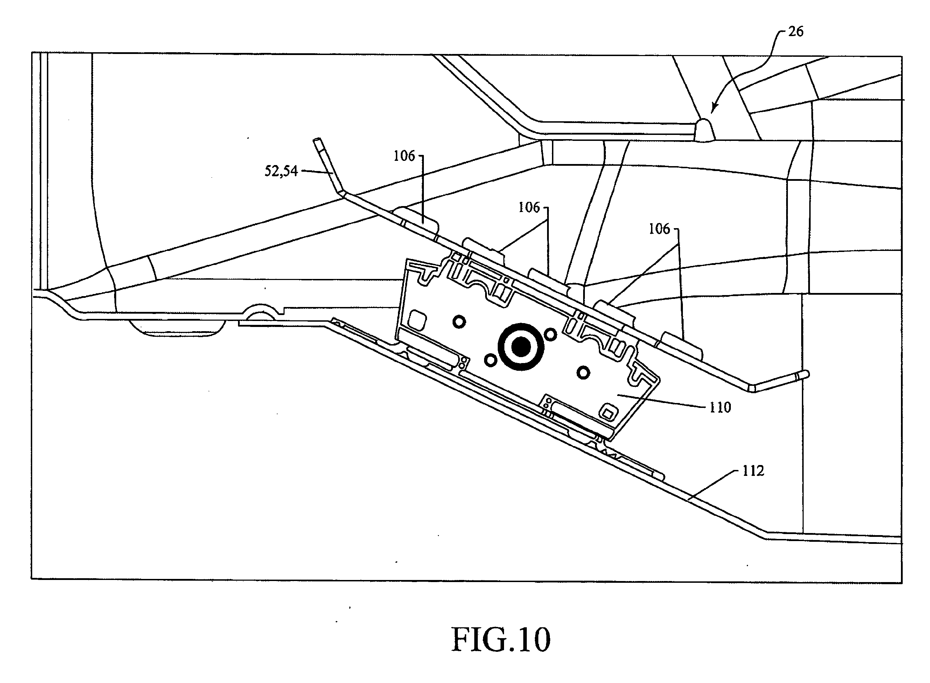

With electronic pedals, the mounting positions of the left pedal 52 and the right pedal 54 may be adjustable. For example, as shown best in FIGS. 8-10, each of the left and right pedals 52, 54 may include a series of mounting holes 106. The series of mounting holes 106 may be configured to receive a bolt 108 (or other fastener) for securing the pedal 52, 54 to a mounting structure 110 positioned on a floor 112 in the operator cab 26. The mounting structure 110 may contain a pedal harness (not shown) which may physically connect the pedal 52, 54 to the controller 42, e.g., via wiring.

The series of mounting holes 106 may provide two or more positions for mounting of the pedals 52, 54. For example, the bolts 108 in each of the left and right pedals 52, 54 may be loosened and removed from one set of mounting holes 106. The pedal 52, 54 may be moved to another position relative to the mounting structure 110, and a different set of mounting holes 106 may be used to align the pedal 52, 54 with the mounting structure 110. The bolts 108 may then fasten the pedal 52, 54 back down into the mounting structure 110 through the different set of mounting holes 106.

Adjustable mounting positions for the left and right pedals 52, 54 may provide ergonomic benefits to various operators of the machine 20. For example, depending on a height of the operator, one mounting position may be more desirable than another mounting position. Therefore, a comfortable ergonomic position for the operator may be obtained through the adjustable mounting positions, thereby providing increased ergonomic flexibility in the operator cab 26. It is to be understood that other configurations than the series of different mounting holes 106 may be used to provide adjustable mounting positions for the electronic pedals.

In addition, with pattern switching and electronic operator controls, the controller 42 may be configured to provide a throttle pedal functionality to the right pedal 54 (and/or left pedal 52) when operating in a predetermined control pattern including hand operator controls only. For example, the ISO control pattern 56 involves left and right joysticks 48, 50 only. Therefore, since the left and right pedals 52, 54 are not conventionally part of the ISO control pattern 56, one or both of the pedals 52, 54 may be used as a throttle pedal for acceleration/deceleration.

In so doing, throttle pedal functionality may be maintained when switching from the hand and foot control pattern 82 to the ISO control pattern 56. With electronic joysticks 48, 50 and pedals 52, 54, the controller 42 may send signals to the hydraulic system 44 according to the various predetermined control patterns programmed into the memory 43 associated with the controller 42. Since function of the joysticks 48, 50 and pedals 52, 54 is no longer mechanically linked to certain components of the machine 20, multiple, enhanced control patterns may be provided to the operator. It is to be understood that the throttle pedal functionality may also be provided in the H control pattern 92 or other control patterns involving hand controls only.

In addition to or instead of the throttle pedal functionality, the left pedal 52 and/or right pedal 54 may include another type of functionality while in a control pattern involving hand controls only (e.g., the ISO control pattern 56 or the H control pattern 92). For example, when the ISO control pattern 56 is selected, the right pedal 54 may serve as a throttle pedal and the left pedal 52 may be used to control another component of the machine 20. Additional functionality of the left pedal 52 and/or right pedal 54 may be programmed into the memory 43 associated with the controller 42. Similarly, in other control patterns, additional functionality may be programmed for the left joystick 48 and/or right joystick 50, such as, in the left joystick 48 of the fourth predetermined control pattern 97 (FIG. 6).

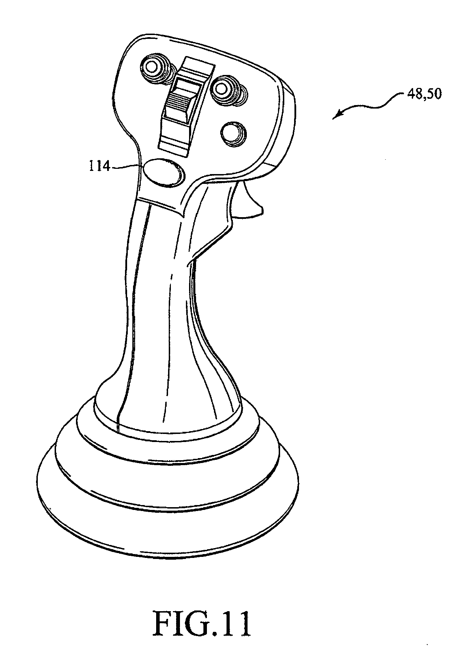

Furthermore, the operator interface 46 may include a control 114, shown best in FIG. 11, configured to provide a signal to the controller 42 to operate the machine 20 in accordance with the ISO control pattern 56 (or other predetermined control pattern) when activated by the operator. For example, the control 114 may comprise a push button on the left joystick 48 (and/or right joystick 50.) However, other types of operator controls are certainly possible.

When the operator activates the control 114, the controller 42 may automatically operate the machine 20 according to the ISO control pattern 56 for an indefinite period of time until the operator deactivates the control 114. With this feature, drive function control immediately transfers to the left joystick 48 and loader function control immediately transfers to the right joystick 50, regardless of the predetermined control pattern selected by the operator via the switch 98. In so doing, the operator, may immediately drive the machine 20 using only one hand on the left joystick 48, e.g., as opposed to both hands in the H control pattern 92.

Although not shown, various features may be added to the operator interface 46 in order to assimilate operators to electronic operator controls. For example, some operators may only be familiar with mechanically linked joysticks and pedals and may be unaccustomed to using electronic joysticks 48, 50 and pedals 52, 54. Left and right joysticks 48, 50 may be short throw joysticks. However, in order to acclimatize operators to electronic joysticks, left and right joysticks 48, 50 may certainly be provided as long throw joysticks.

Furthermore, a detent off center may be added to the left and right pedals 52, 54, in order to provide a heavier, more intentional movement of the implement 32. In another example, to increase pedal resistance, a spring force of the coil springs under the left and right pedals 52, 54 may be raised. It is to be understood that other enhancements to the joysticks 48, 50 and pedals 52, 54 may certainly be used to simulate mechanical linkage type control.

### Industrial Applicability

In general, the foregoing disclosure finds utility in various industrial applications, such as in earthmoving, construction, industrial, agricultural, and forestry machines. In particular, the disclosed control system and method may be applied to skid-steer loaders, multi-terrain loaders, compact track loaders, backhoe loaders, wheel loaders, tractors, and the like.

By applying the disclosed control system to a machine, operators may switch between different control patterns in order to operate the machine according to a familiar or preferred control pattern. Furthermore, the disclosed control system may include electronic operator controls and the pedals may be adjustable to provide enhanced ergonomic flexibility in the operator cab. In addition, extra functionality may be built into the pedals when in the ISO control pattern, and an operator control may be provided to allow immediate switching to the ISO control pattern. In so doing, the disclosed control system provides advanced control benefits not offered with conventional mechanical linkage machines.

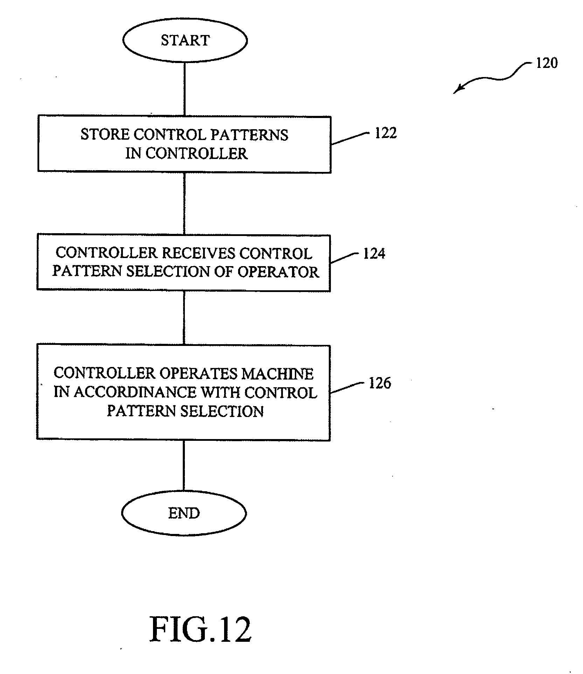

Turning now to FIG. 12, a flowchart outlining a process 120 for controlling a machine is shown. At block 122, the plurality of predetermined control patterns, e.g., the first predetermined control pattern and the second predetermined control pattern, may be stored in the memory associated with the controller. At block 124, the controller may receive the signal from the switch indicative of the control pattern selection of the operator. At block 124, the controller may send signals to the hydraulic system to control the traction devices and the implement according to the control pattern selection of the operator.

While the foregoing detailed description has been given and provided with respect to certain specific embodiments, it is to be understood that the scope of the disclosure should not be limited to such embodiments, but that the same are provided simply for enablement and best mode purposes. The breadth and spirit of the present disclosure is broader than the embodiments specifically disclosed and encompassed within the claims appended hereto. Moreover, while some features are described in conjunction with certain specific embodiments, these features are not limited to use with only the embodiment with which they are described, but instead may be used together with or separate from, other features disclosed in conjunction with alternate embodiments.

## Claims

1. A control system (40) for a machine (20) having traction devices (24), an implement (32), and a hydraulic system (44) configured to drive the traction devices (24) and the implement (32), the control system (40) comprising:
an operator interface (46) configured to receive input from and output data to an operator of the machine (20); and
a controller (42) in communication with the operator interface (46) and the hydraulic system (44), the controller (42) configured to:
receive a signal from the operator interface (46) to operate the machine (20) according to a first predetermined control pattern,
send signals to the to the hydraulic system (44) to control the machine (20) according to the first predetermined control pattern,
receive a signal from the operator interface (46) to operate the machine (20) according to a second predetermined control pattern, and
send signals to the hydraulic system (44) to control the machine (20) according to the second predetermined control pattern.

2. The control system of claim 1, wherein the operator interface (46) includes a switch (98) configured to provide a signal indicative of a control pattern selection of the operator.

3. The control system of claim 1, wherein the operator interface (46) includes a left pedal (52), a right pedal (54), a left joystick (48), and a right joystick (50).

4. The control system of claim 3, wherein each of the left pedal (52), the right pedal (54), the left joystick (48), and the right joystick (50) is electronic.

5. The control system of claim 4, wherein mounting positions of the left pedal (52) and the right pedal (54) are adjustable.

6. The control system of claim 5, wherein each of the left pedal (52) and the right pedal (54) includes a series of mounting holes (106) that provide at least two mounting positions.

7. The control system of claim 3, wherein the first predetermined control pattern is an international organization for standardization (ISO) control pattern (56).

8. The control system of claim 7, wherein one of the left pedal (52) and the right pedal (54) provides a throttle pedal functionality with the ISO control pattern (56).

9. The control system of claim 7, wherein the second predetermined control pattern is a hand and foot control pattern (82).

10. The control system of claim 9, wherein the operator interface (46) includes a control (114) configured to provide a signal to the controller (42) to operate the machine (20) according to the ISO control pattern (56) when activated by the operator.

11. The control system of claim 10, wherein additional functionality in one of the left pedal (52) and the right pedal (54) is programmed into a memory (43) associated with the controller (42) with the ISO control pattern (56).

12. A method (120) for controlling a machine (20), the machine (20) having a controller (42) in communication with an operator interface (46) and a hydraulic system (44), the operator interface (46) configured to receive input from and output data to an operator of the machine (20) and including a switch (98) configured to receive input from the operator for a control pattern selection, the hydraulic system (44) configured to control traction devices (24) and an implement (32) of the machine (20), the method (120) comprising:
storing a first predetermined control pattern and a second predetermined control pattern in a memory (43) associated with the controller (42), the first predetermined control pattern including hand operator controls and the second predetermined control pattern including hand operator controls and foot operator controls;
the controller (42) receiving a signal from the switch (98) indicative of a control pattern selection of the operator, the control pattern selection being one of the first predetermined control pattern and the second predetermined control pattern; and
the controller (42) sending signals to the hydraulic system (44) to control the traction devices (24) and the implement (32) according to the control pattern selection.

13. The method of claim 12, further comprising the first predetermined control pattern being an international organization for standardization (ISO) control pattern (56) and the second predetermined control pattern being a hand and foot control pattern (82).

14. The method of claim 13, further comprising storing a third predetermined control pattern in the memory (43) associated with the controller (42), the third predetermined control pattern being an H control pattern (92).

15. The method of claim 14, further comprising storing a fourth predetermined control pattern (97) in the memory (43) associated with the controller (42), the fourth predetermined control pattern (97) including control of a drive function of the machine by foot controls.
